# EUROPEAN PATENT APPLICATION

(11) **EP 3 456 623 A1**
(43) Date of publication of application: **20.03.2019**
(21) Application number: 16904736.2
(22) Date of filing: 20.09.2016
(51) Int. Cl.: B63J 99/00, G06Q 50/00, H04L 12/24

(54) **METHOD FOR COLLECTING VESSEL DATA USING VESSEL DATA MODEL, DEVICE FOR COLLECTING VESSEL DATA, AND VESSEL COMPRISING SAME**

(30) Priority: 09.06.2016 KR 20160071685
(71) Applicant: Hyundai Electric & Energy Systems Co., Ltd., Jongno-gu, Seoul 03058 (KR)
(72) Inventor: PARK, Ki Soo, Ulsan 44032 (KR); KANG, Jong Gu, Ulsan 44032 (KR); CHEONG, Young Soo, Ulsan 44032 (KR); PARK, Jee Hoon, Ulsan 44032 (KR); HA, Seong Min, Ulsan 44032 (KR); LEE, Dan Bi, Ulsan 44032 (KR); SONG, Chan Ho, Ulsan 44032 (KR)
(74) Representative: Jaeger, Michael David
(86) International application number: PCT/KR2016/010483
(87) International publication number: WO 2017/213303

(57) **Abstract**

The present invention relates to a method for collecting vessel data using a vessel data model (VDM), a device for collecting vessel data, and a vessel comprising same. Accordingly, it is preferable that the present invention comprises the steps of: acquiring vessel data generated from vessel equipment; and, on the basis of a VDM, converting the vessel data into integrated vessel data having an integrated format, and collecting same, wherein the VDM is generated by combining a vessel model, a system model and a data model, wherein the vessel model is a model defined by hierarchically classifying the vessel equipment, the system model is a model defined by structuring the vessel data, and the data model is a model for defining the attributes and types of the vessel data.

## Description

### [Technical Field]

The present disclosure relates to a method and device for collecting vessel data using a vessel data model and a vessel comprising the same.

### [Background Art]

Vessels are categorized according to the purpose of use, the type of cargo and the method by which the cargo is loaded, and vessels may be classified into commercial vessels, specialized vessels, military vessels and fishing vessels according to the purpose of use, and may be classified into container ships, bulk carriers, tankers, chemical tankers, LPG carriers, LNG carriers and car carriers according to the type of cargo.

Various types of vessels as described above each have a great deal of sensors and devices mounted thereon to function for use that suits the purpose.

Each sensor and device are collected and processed by integration equipment and provided to a service necessary for safe navigation, and because one or more sensors and devices are made using different protocols for each manufacturer, it was not easy to collect data, and even though data is collected, there is no method for managing the collected data in an integrated manner, so there are many constraints on transfer and utilization of the collected data not only on board but also on shore.

Meanwhile, International Maritime Organization (IMO) compels the specified "Maritime navigation and radiocommunication equipment and systems" (e.g., Voyage Data Recorder (VDR), Integrated Navigation System (INS), etc.) to conform to International Electronical Committee (IEC) 61162 based digital interfaces. Here, IEC 61162 is the communication standards for communication interfaces between "Maritime navigation and radiocommunication equipment and systems", and IEC 61162 is aligned with the National Marine Electronics Association (NMEA) standard.

In contrast, equipment (e.g., Alarm Monitoring System (AMS), Bridge Maneuvering System (BMS), etc.) other than "Maritime navigation and radiocommunication equipment and systems" is not bound to conform to IEC 61162. Additionally, there is a great limitation in expressing data using the already published NMEA, and thus other industrial standards or a de facto standard is mainly selected and used.

By this reason, there is no common standard for interfacing between equipment other than "Maritime navigation and radiocommunication equipment and systems".

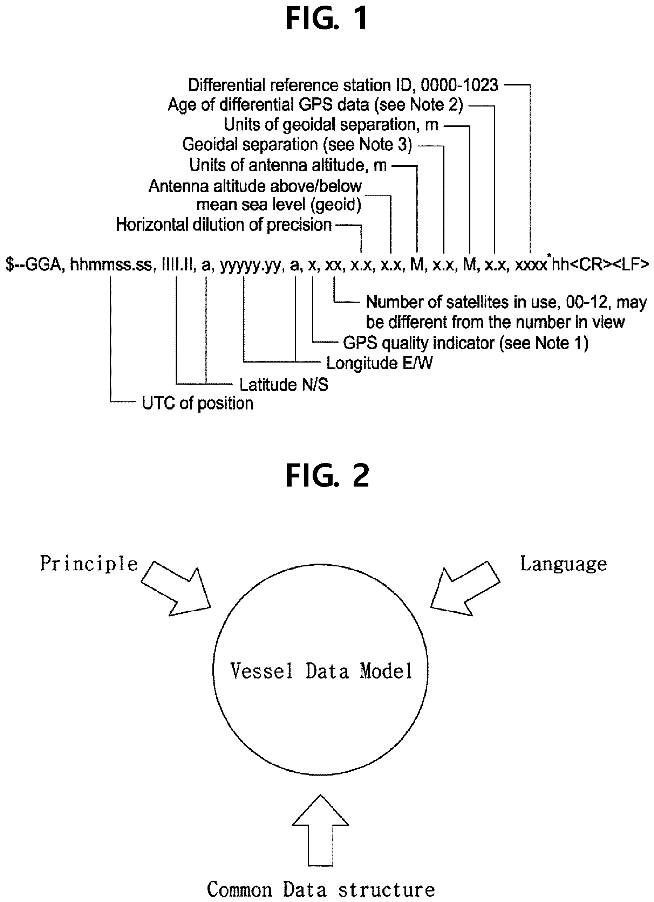

For example, the NMEA sentence structure receiving the position from Global Positioning System (GPS) is as shown in FIG. 1. The NMEA sentence is shared between system developers through a standard document, but any individual modification is not allowed.

When data to be used on the IEC 61162 standards is not data that is predefined in NMEA sentence, is it is necessary to additionally perform a task for defining the corresponding data in NMEA sentence under the mutual agreement, and share through an interface agreement document between them.

As described above, when data to be used on the IEC 61162 standards is not predefined in NMEA sentence, there is inconvenience in having to additionally define the data, write it in a document and share it.

### [Disclosure]

### [Technical Problem]

The present disclosure is designed to solve the above-described problem, and an object of the present disclosure is to provide a method for collecting vessel data using a vessel data model, which converts vessel data having different formats into integrated vessel data having an integrated format based on a Vessel Data Model (VDM) and collects the same.

Another object of the present disclosure is to provide a device for collecting vessel data using a vessel data model, which converts vessel data having different formats into integrated vessel data having an integrated format based on a vessel data model and collects the same.

Still another object of the present disclosure is to provide a method for modeling vessel data model, which provides a vessel data model for storing vessel data having different formats made by different protocols into an integrated data format.

### [Technical Solution]

To achieve the above-described object, a method for collecting vessel data using a Vessel Data Model (VDM) according to an embodiment of the present disclosure includes acquiring vessel data generated from vessel equipment, and converting, on the basis of a VDM, the vessel data into integrated vessel data having an integrated format, and collecting same, and preferably, the VDM is generated by combining a vessel model, a system model and a data model, the vessel model is a model defined by hierarchically classifying the vessel equipment, the system model is a model defined by structuring the vessel data, and the data model is a model for defining the attributes and types of the vessel data.

In the method for collecting vessel data using a vessel data model according to an embodiment of the present disclosure, preferably, the vessel model is defined as vessel level, equipment group level, equipment level and component level, the vessel level is a level on which a vessel itself is defined, the equipment group level is a level on which vessel equipment is grouped and defined as an equipment group, the equipment level is a level on which physical equipment, abstract equipment and logical equipment belonging to the equipment group are defined as equipment, and the component level is a level on which the equipment is subdivided and defined as component.

In the method for collecting vessel data using a vessel data model according to an embodiment of the present disclosure, preferably, the system model is defined as system level, logical device level, logical node level and data object level, the system level is a level on which a system for collecting vessel data is defined, the logical device level is a level on which logical equipment belonging to the system is defined as logical device, the logical node level is a level on which an object of function unit belonging to the logical device is defined as logical node, and the data object level is a level on which a type of vessel data of the data model is defined as a data object.

In the method for collecting vessel data using a vessel data model according to an embodiment of the present disclosure, preferably, the logical node includes Class that defines a type or category of the logical node, and Inst that is a number necessary when indicating multiple objects.

In the method for collecting vessel data using a vessel data model according to an embodiment of the present disclosure, preferably, the logical node further includes Prefix that defines a purpose or use of the logical node.

In the method for collecting vessel data using a vessel data model according to an embodiment of the present disclosure, preferably, a name of the logical node is defined in an order of the Prefix, the Class and the Inst, and the name is unique within a logical device to which the logical node belongs.

In the method for collecting vessel data using a vessel data model according to an embodiment of the present disclosure, preferably, the data model includes Data Class that defines a type of the vessel data, and Data Attribute that defines an attribute of the vessel data.

In the method for collecting vessel data using a vessel data model according to an embodiment of the present disclosure, preferably, the vessel model, the system model and the data model are combined by a combination model to generate the VDM, and the combination model sets connection information for connecting the vessel model with the system model.

In the method for collecting vessel data using a vessel data model according to an embodiment of the present disclosure, preferably, the VDM hierarchically defines paths leading to each vessel data, and each vessel data is identified by VDM Path.

In the method for collecting vessel data using a vessel data model according to an embodiment of the present disclosure, preferably, the VDM Path includes at last one name of equipment group, equipment, component, logical device, logical node, data object and data attribute.

In the method for collecting vessel data using a vessel data model according to an embodiment of the present disclosure, preferably, the VDM Path has a sequential arrangement of at least one name of the equipment group, the equipment, the component, the logical device, the logical node, the data object and the data attribute.

In the method for collecting vessel data using a vessel data model according to an embodiment of the present disclosure, preferably, the VDM Path is divided into VDM Path for data collection, and VDM Path for data provision.

In the method for collecting vessel data using a vessel data model according to an embodiment of the present disclosure, preferably, the VDM Path for data collection includes at least one name of system, logical device, logical node, data object and data attribute.

In the method for collecting vessel data using a vessel data model according to an embodiment of the present disclosure, preferably, the VDM path for data provision includes a unique ID that identifies the vessel.

In the method for collecting vessel data using a vessel data model according to an embodiment of the present disclosure, preferably, the range of data provided hierarchically changes depending on hierarchy level of the VDM Path for data provision.

In the method for collecting vessel data using a vessel data model according to an embodiment of the present disclosure, preferably, the VDM is described in vessel data model configuration description language to form a vessel data model configuration description file, and the vessel data model configuration description file includes definition of vessel part, system part and data type part.

Meanwhile, a device for collecting vessel data using a vessel data model according to an embodiment of the present disclosure acquires vessel data generated from vessel equipment, and on the basis of a VDM, converts the vessel data into integrated vessel data having an integrated format and collects the same, and preferably, the VDM is generated by combining a vessel model, a system model and a data model, the vessel model is a model defined by hierarchically classifying the vessel equipment, the system model is a model defined by structuring the vessel data, and the data model is a model for defining the attributes and types of the vessel data.

Meanwhile, a method for modeling vessel data model according to an embodiment of the present disclosure preferably includes the vessel modeling step of hierarchically classifying vessel equipment and defining as a vessel model, the system modeling step of structuring data generated from the vessel equipment and defining as a system model, the data modeling step of defining attribute of the data generated from the vessel equipment as a data model, and the combination modeling step of combining the vessel model, the system model and the data model to form a Vessel Data Model (VDM).

### [Advantageous Effects]

According to the method and device for collecting vessel data using a vessel data model in accordance with the present disclosure and the vessel comprising the same, it is possible to manage (collect, store, provide) all formats of vessel data made by different protocols into one system.

### [Description of Drawings]

FIG. 1 is an exemplary diagram showing the conventional NMEA sentence structure.
FIG. 2 is a diagram showing three elements of VDM according to an embodiment of the present disclosure.
FIG. 3 is a schematic diagram showing the structure system of VDM according to an embodiment of the present disclosure.
FIG. 4 is a UML diagram showing the vessel model hierarchy structure of VDM according to an embodiment of the present disclosure.
FIG. 5 is a UML diagram showing the system model hierarchy structure of VDM according to an embodiment of the present disclosure.
FIG. 6 is a data model UML diagram of VDM according to an embodiment of the present disclosure.
FIG. 7 is a combination model UML diagram of VDM according to an embodiment of the present disclosure.
FIG. 8 is a diagram showing a relationship between a system model and a data model of VDM according to an embodiment of the present disclosure.
FIG. 9 is a diagram showing a relationship between VCL and a vessel data model configuration description file according to an embodiment of the present disclosure.
FIGS. 10 to 12 are diagrams illustrating VDM Path according to an embodiment of the present disclosure.
FIG. 13 is a processing diagram illustrating a method for modeling vessel data model according to an embodiment of the present disclosure.
FIG. 14 is a processing diagram illustrating the vessel modeling step (S100) of FIG. 13.
FIG. 15 is a processing diagram illustrating the system modeling step (S200) of FIG. 13.
FIG. 16 is a processing diagram illustrating the data modeling step (S300) of FIG. 13.
FIG. 17 is a processing diagram illustrating the combination modeling step (S400) of FIG. 13.
FIG. 18 is a processing diagram illustrating a method for collecting vessel data using a vessel data model according to an embodiment of the present disclosure.
FIG. 19 is a schematic diagram showing the configuration of a device for collecting vessel data using a vessel data model according to an embodiment of the present disclosure.

### [Best Mode]

Hereinafter, a method and device for collecting vessel data using a vessel data model according to a preferred embodiment of the present disclosure and a vessel comprising the same will be described in detail with reference to the accompanying drawings.

In describing the embodiments of the specification, when a certain detailed description of relevant known elements or functions is determined to render the subject matter of the present specification vague, the detailed description may be omitted herein.

The terms "comprises" and "comprising" as used herein specify the presence of stated functions, operations and elements, but do not preclude the presence or addition of one or more other functions, operations and elements. Additionally, it should be understood that the term "comprises" or "includes" when used in this specification specifies the presence of stated features, figures, steps, operation, elements, components or groups thereof, but does not preclude the presence or addition of one or more other features, figures, steps, operation, elements, components or groups thereof. As used herein, the singular forms are intended to include the plural forms as well, unless the context clearly indicates otherwise.

The key terms as used herein are defined as follows.

Vessel data integration platform (VDIP) is for collecting, processing, analyzing, storing and transmitting various vessel data, and refers to any system including software, firmware and hardware devices that manage vessel data in an integrated manner or their selective combinations, or may be used in software sense.

Vessel data model (VDM) is a data model for defining all data associated with the vessel into one system, and objectifies all devices ranging from the vessel itself to an end sensor and defines a relationship between objects and attributes of objects.

Vessel data model configuration description Language (VCL) is the language used to write a vessel data model configuration description file for describing VDM.

Vessel data model configuration description file is a configuration file that describes VDM in VCL.

Mapping configuration description file is a file that defines a rule for converting equipment output data into VDM based integrated vessel data.

Mapping is a process of connecting equipment output data to VDM.

Equipment is mounted on the vessel for a special purpose, and collects various vessel data generated in the vessel, and transmits the collected vessel data to VDIP.

Raw data is data in various formats collected by equipment from sensors or devices.

Hereinafter, the present disclosure is described with reference to the accompanying drawings.

First, to realize the embodiments of the present disclosure, it is necessary to manage vessel data into one system to collect and use all formats of data generated in the vessel.

That is, vessel data generated in the vessel includes various types of data such as sensor data generated from a sensor attached to equipment in the vessel, configuration data used in equipment, condition data of equipment, alarm data representing error information, metadata that describes data, and design data.

Currently, vessel data is made by different protocols for each manufacturer.

Accordingly, a standard that can manage various formats of vessel data into one system is established to improve the efficiency and economic efficiency of data processing.

Vessel data has a close relationship with the shipbuilding industry and the characteristics of vessels, and the standard system of vessel data should consider this feature. A summary of the shipbuilding industry and the characteristics of vessels is as follows.
- Shipbuilding industry is a typical custom-making industry in which all specifications may be determined by the customer. In many cases, specifications are determined within a predetermined range, but the case in which specifications fall outside the predetermined range cannot be excluded.
- Vessels have some characteristics of residences, offices, factories and warehouses where sailors reside and work, and besides, have essential requirements that are unique to vessels; floatability, loadability, mobility and stability. To implement this, a variety of many mechanical, electrical, hydraulic, pneumatic, electronic, communication or S/W equipment is mounted in vessels.
- Vessels are classified according to the purpose of use, the type of cargo and the method by which the cargo is loaded. Vessels include commercial vessels, specialized vessels, military vessels and fishing vessels according to the purpose of use, and include container ships, bulk carriers, tankers, chemical tankers, LPG carriers, LNG carriers and car carriers according to the type of cargo.
- The configuration, specification, arrangement and combination of all internal equipment changes depending on the customer's needs and the type of vessel. That is, each shipping line has its unique system architecture. In addition, as individual equipment also has different characteristics for each manufacturer and each model, all these factors affect data configuration.

Assumption that can be derived through the shipbuilding industry and the characteristics of vessels as described above is as follows.
- As the external environment for defining vessel data always changes, it is necessary to consider the influences of a ship type difference, a shipping line difference and new equipment introduction in advance.
- There is uncertainty that is uncontrollable by manufacturers cannot control, and thus, the premises are modification and adaptation.

Hereinafter, a vessel data model (VDM) that is established to manage vessel data based on a common model, considering the shipbuilding industry and the characteristics of vessels as described above, will be described.

As shown in FIG. 2, VDM largely has three conceptual categories, and the three concepts are vessel data standardization principle (Principle), Language and Common Data Structure.

First, the vessel data standardization principle (Principle) that builds a system for commonly representing and exchanging all formats of data generated in the vessel is as follows.

VDM conforms to the following.
- Common and general knowledge and classification systems that can be accepted as widely as possible in the shipbuilding or vessel domain are pursued, while avoiding dependency on particular systems and providers.
- VDM is configured in reusable form to facilitate the continuous use and enable the adaptation to changes.

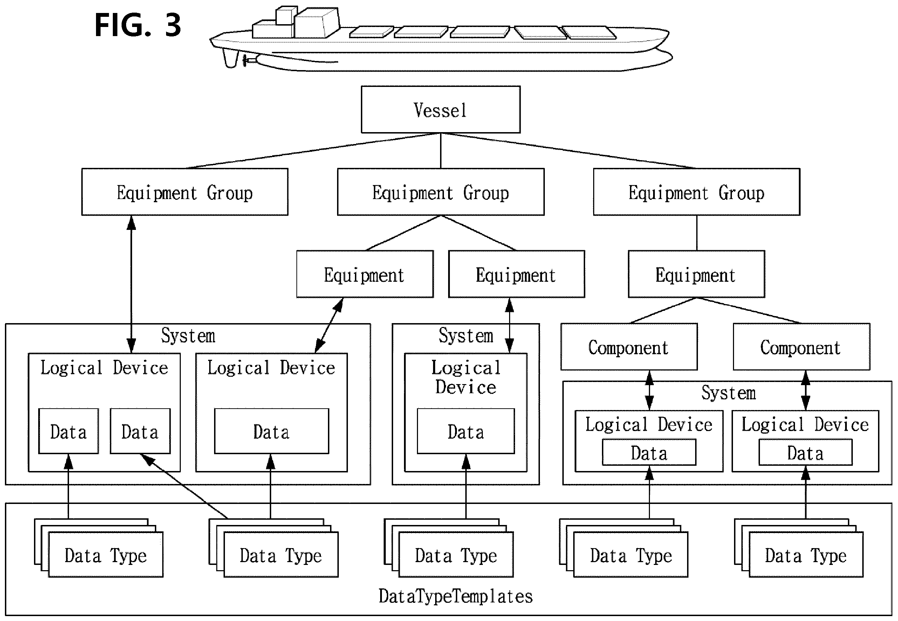

To represent vessel data, VDM defines a combination of three models, Vessel Model of modeling Vessel Part, System Model of modeling System Part, and Data Model of modeling Data Type Part as shown in FIG. 3.
- Vessel Model
- System Model
- Data Model

The vessel model is a hierarchical classification system of equipment that constitutes the vessel, and is an entire set of equipment that can be defined for each level, and the entire set can be extended.

As shown in Table 1, the vessel model may be defined as four levels. Each of the four levels is:
- Level 1: Vessel
- Level 2: Equipment Group
- Level 3: Equipment
- Level 4: Component.

**[Table 1]**

| Level | Name | Description | Remarks |
|---|---|---|---|
| Level 1 | Vessel | Vessel. Top-level element | |
| Level 2 | Equipment Group | Conceptual group of equipment | |
| Level 3 | Equipment | Real equipment or abstract/logical equipment | |
| Level 4 | Component | Subdivision of Equipment | Optional |

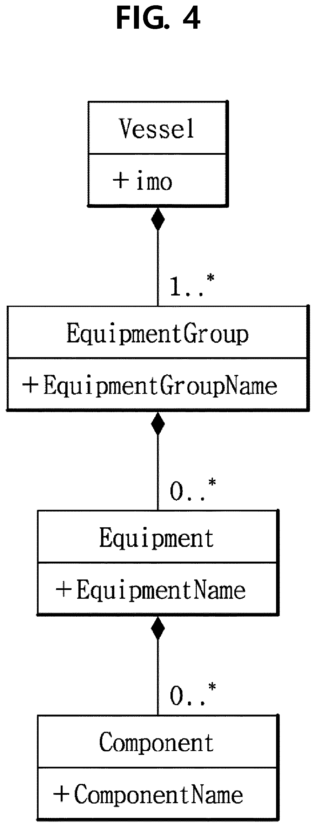

FIG. 4 is a Unified Modeling Language (UML) diagram showing the vessel model hierarchy structure of VDM, in which Vessel has one or more Equipment Groups, each Equipment Group has 0 or more Equipment, and each Equipment has 0 or more Component (see FIG. 3).

Here, the highest level, Level 1, is Vessel that signifies the vessel itself. Vessel includes an IMO number corresponding to a unique ID that identifies the vessel.

Instances of Level 2, Equipment Group level, make up one Vessel. Here, Equipment Group is subordinate to Vessel.

Level 2, Equipment Group, is a conceptual group of Level 3, Equipment, and uses the group name widely used for classification in the shipbuilding industry. For example, classification into Machinery, Hull, Electrical, and Navigational may be used.

Level 3, Equipment, is a level that mainly represents real equipment, and has the largest number of available items and instances in real equipment.

The Equipment level is not limited to only real equipment, and may represent abstract or logical equipment. For example, not only real physical equipment such as engines or boilers, but also abstract/logical concept such as stability indication and loading status may be applied.

Level 4, Component, is an optional level used when subdividing Equipment into smaller parts, and is used when classification and reuse is needed due to independency of Component itself or when the scale of Equipment itself is large. For example, in the case of the engine, many cylinders, auxiliary machines and piping systems form a huge integrated system, so when each is subdivided into components and defined, making it possible to classify under necessary viewpoints and separately use.

For example, the vessel model may be defined as shown in Table 2.

**[Table 2]**

| Vessel Model | | |
|---|---|---|
| Equipment Group | Equipment | Component |
| Machinery | Machinery equipment | Diesel engine |
| | | Steam turbine |
| | | Gas turbine, multiple shafts |
| | | Hydraulic motor |
| | | ... |
| | Pressurised equipment | Pressure vessel |
| | | Container |
| | | Well |
| | | ... |
| | ... | ... |
| Electrical | Switchgear | Switchboard |
| | | Motor control centre |
| | | Motor starter |
| | | ... |
| | Electric rotating machines | Electric motor |
| | | Generator |
| | ... | ... |
| Navigational | Charts | Electronic chart display and information system (ECDIS) |
| | Positioning equipment | Global positioning system (GPS) |
| | | Differential global positioning system (DGPS) |
| | | ... |
| | Heading information equipment | Gyro compass |
| | | ... |
| | Speed measuring equipment | Electromagnetic log |
| | | Doppler log |
| | | ... |
| | ... | ... |
| ... | ... | ... |

The entire vessel model set described above can be continuously extended.

Meanwhile, the system model is a structured logical model for data generated from the equipment that constitutes the vessel.

Mechanical, electrical, hydraulic, pneumatic, electronic, communication or software (S/W) equipment exists together in the vessel, and data generated from the equipment is collected by devices (Information Technology (IT), electronic and S/W equipment) capable of collecting data.

The system model is used to define an internal data model for data that can be collected in the individual data collection devices.

The system model increases the reusability of the data model and manages the variability in the data collection device. For example, the data collection device, equipment A, is a device that collects data related to the engine and the piping system, the device's own logical model for the engine and the piping system may be established in the device. Additionally, when the data collection device, equipment B, is a device that mainly collects data related to navigation, a logical model mainly about navigation data will be established. In case that equipment B needs to collect some of the data of equipment A in the future, it is possible to reuse the model in such a way that equipment B may import and use the logical model of equipment A.

As shown in Table 3, the system model may be defined as four levels. Each of the four levels is:
- Level 1: System
- Level 2: Logical Device
- Level 3: Logical Node
- Level 4: Data Object.

**[Table 3]**

| Level | Name | Description | Remarks |
|---|---|---|---|
| Level 1 | System | System | |
| Level 2 | Logical Device | Top-level logical equipment modeling | |
| Level 3 | Logical Node | Basic unit of logical function | |
| Level 4 | Data Object | Instance of data type | |

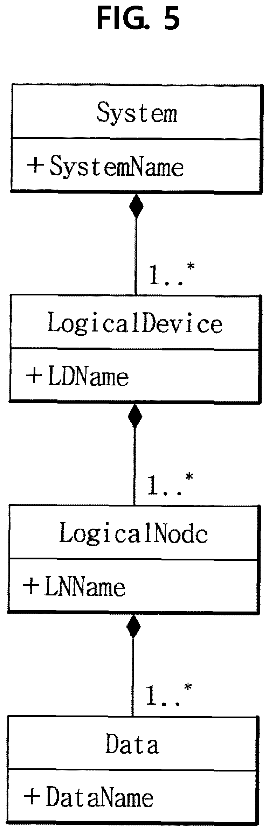

FIG. 5 is a UML diagram showing the system model hierarchy structure of the vessel data model, in which System has one or more Logical Devices, each Logical Device has one or more Logical Nodes, and each Logical Node has one or more Data Objects.

Level 1, System level, represents a data collection device (equipment), and includes one or multiple logical devices.

Level 2, Logical Device level, is the highest-level concept of logical equipment modeling, and includes one or multiple logical nodes.

Logical Device may include, for example, models of main engine, generator engine, boiler, tank and positioning device defined in System, and may be a model of concept of their combination.

Level 3, Logical Node level, includes objects that are created by modeling the function units of the vessel domain, and is the most fundamental level of VDM. Logical Node may include the following three elements.
- Prefix: prefix (optional) that defines Logical Node according to the purpose or use of Logical Node
- Class: indicates the type or category of Logical Node
- Inst: number necessary when indicating multiple objects

The Logical Node name (LNName) of is defined as <prefix>+<class>+<inst>, and this combination should be unique within a logical device to which the corresponding logical node belongs. For example, three pumps used in Central CFW system may be modeled using a predefined Pump Class, and each may be referred to as CentralCFWPump1, CentralCFWPump2, and CentralCFWPump3 so that they can be distinguished from other pumps using the prefix CentralCFW. If there is no overlap, CentralCFW may be omitted, and each may be defined as Pump1, Pump2, and Pump3.

Class of Logical Node is the key element of standardization that encourages to predefine and use the objects of the essential function units of the vessel domain.

Level 4, Data Object level, is the most basic unit of data configuration, and objectifies and defines Data Class of Data Model.

Meanwhile, the data model provides the means for creating a desired data object by providing a method that can define not only basic data type, but also their combination, or a composite data type.

When the system model is a structured logical model for data generated from equipment that constitutes the vessel, the data model is a model that represents the generated data itself, and the data type may be defined by recursive structurization. The data model increases the reusability of the data type and manages the variability.

This data model may include the following elements.
- Data Class
- Data Attribute
- Recursion of Data Attribute (optional)
- Basic Data Type

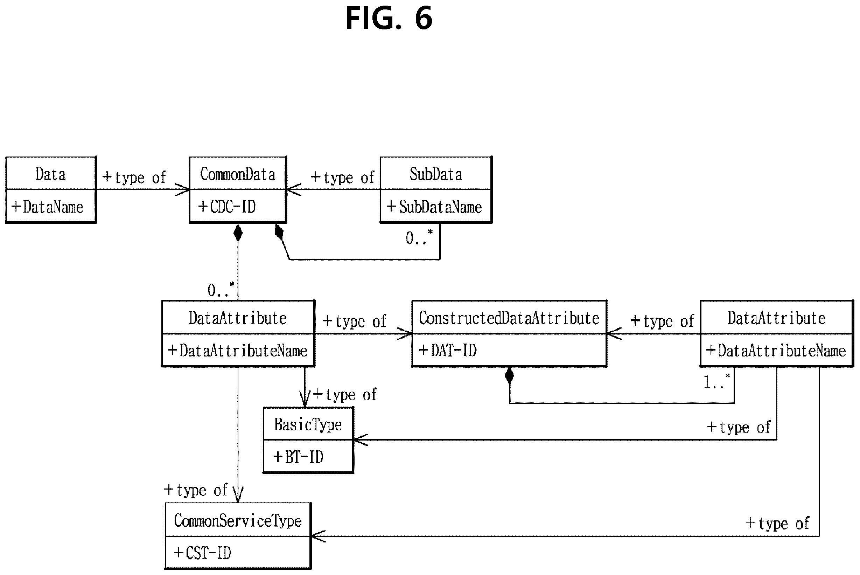

FIG. 6 is a UML diagram of data model, and Data Object of system model assigns an ID to objectify and define Data Class of the data model.

Data Class is a data type in which data attributes are grouped into a meaningful combination.

Data Attribute is the most basic unit of the data model and can be recursively defined, and finally, has one of basic data types (Float, Timestamp, String, ...) as a type.

As described above, VDM includes a vessel model, a system model and a data model, and these three models are combined to form a VDM.

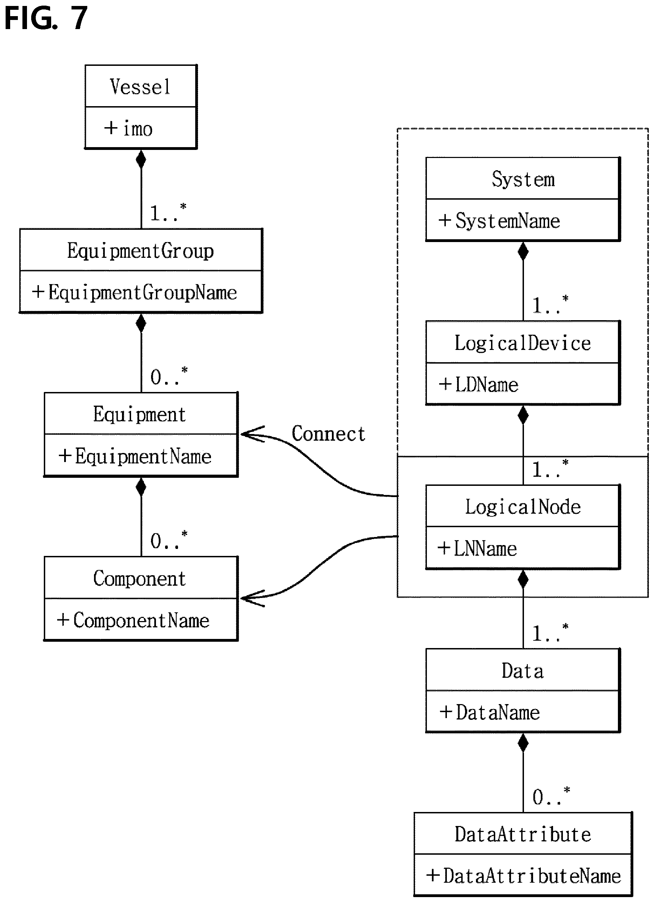

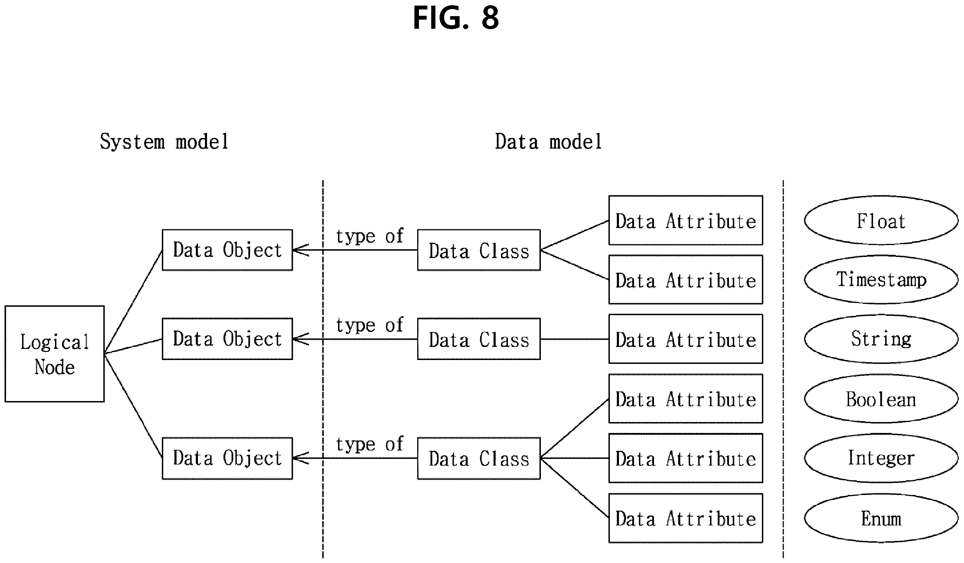

The basic principle of a combination model that combines the three models described above is as follows.
- Vessel model systematically classifies and hierarchically divides the vessel.
- System model defines a logical node of logical equipment in a particular system.
- Data model defines data class of data object of system model.
- Instance of equipment or component level of vessel model may be connected with logical node of system model as shown in FIG. 7.
- Connection information for connecting vessel model with logical node of system model may be set.
- Connection information indicates system and logical device for connection of an only logical node.
- Data object of system model objectifies data class of data model as shown in FIG. 8.

Each instance (object) defined by VDM as noted above is assigned with an object identifier for uniquely identifying each instance (object), and data attribute is defined.

VDM refers to the object identifier as VDM Path. That is, the VDM Path is used as a unique identifier for particular data in the vessel.

For example, the rule of the VDM Path is as follows.

```
       <VDM Path> = <Equipment Group Name> / <Equipment Name> /
 <Component Name> / <Logical Device Name> / <Logical Node Name>.<Data Object
 Name>.[<Data Attribute Name>]+
```

Here, <Logical Node Name> is composed of <prefix>+<class>+<inst>, and + following [<Data Attribute Name>] represents one or more repetitions.

| Vessel Model | | | System Model | | | | | Data Model |
|---|---|---|---|---|---|---|---|---|
| Equipment Group Name | Equipment Name | Component Name | Logical Device Name | Logical Node Name | | | Data Object Name | Data Attribute Name |
| | | | | Prefix | Class | Instance | | |

The VDM Path of this rule may or may not include the prefix of equipment and component of the vessel model and logical device and logical node of the system model if necessary.

The data attribute defines attributes that data of a corresponding instance should have.

As described above, vessel data summarized by VDM should be described in the form that can be understood by both the system and the interest parties, and to this end, VCL is defined.

VCL is the language used to write a vessel data model configuration description file for describing VDM, and the present disclosure does not limit VCL to a particular type and may use all languages satisfying the following specification as VCL.
- It is possible to describe all elements of vessel model, system model, data model.
- It is possible to set the values of attributes that each element has, and extend the attributes.
- It is possible to describe the combination model.

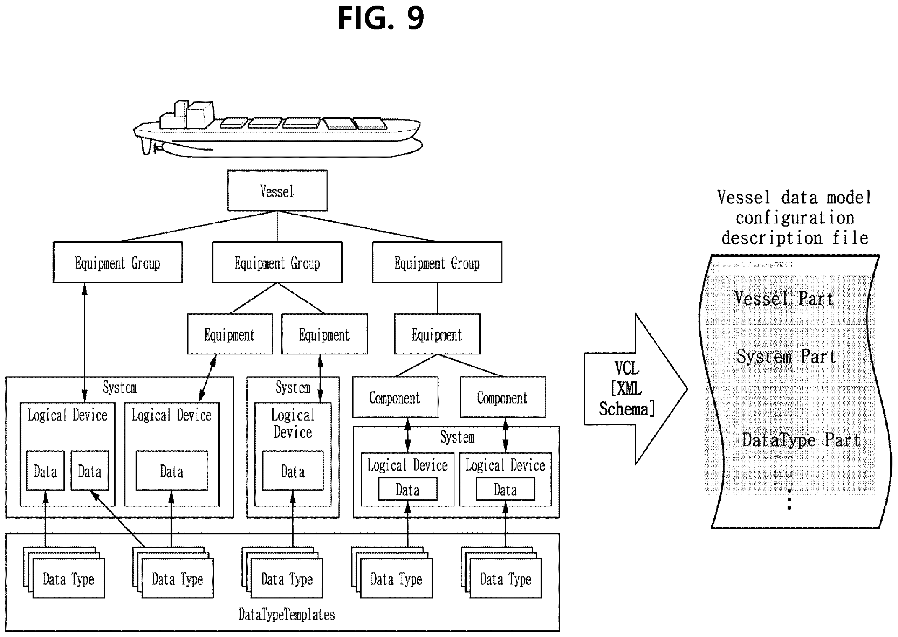

In an embodiment of the present disclosure, XML (eXtensible Markup Language) Schema Definition (XSD) is used as VCL satisfying the above-described specification. As shown in FIG. 9, a vessel data model configuration description file (e.g., VDM Configuration XML) may be written based on VCL.

The vessel data model configuration description file is a configuration file that describes VDM in VCL, and includes definition of Vessel Part, System Part and Data Type Part as shown in FIG. 9.

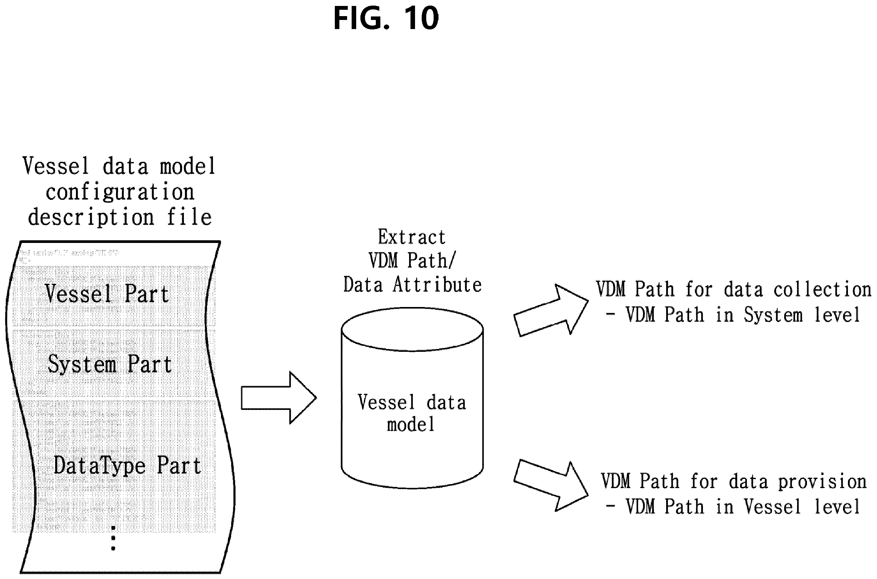

Accordingly, as shown in FIG. 10, it is possible to extract VDM from a vessel data model configuration description file that describes VDM in VCL, and extract VDM Path and data attributes from the extracted VDM.

For example, VCL may be defined as shown in Table 4.

**[Table 4]**

| File name | Description |
|---|---|
| VCL.xsd | Main VCL syntax definition |
| VCL_Vessel.xsd | Vessel model syntax definition |
| VCL_System.xsd | System model syntax definition |
| VCL_DataTypeTemplate.xsd | Data model syntax definition |
| VCL_BaseType.xsd | Basic complex type definition |
| VCL_Enum.xsd | Used XML schema enumeration |
| VCL_BaseSimpleType.xsd | Basic simple type definition |

Meanwhile, Common Data Structure of VDM summarizes vessel data, and summarizes a necessary common and reusable structure. The common data structure is largely summarized into the following two classes.
- Class of Logical Node
- Data Class

Class of Logical Node described above may be defined, for example, as shown in Table 5, and Data Class may be defined, for example, as shown in Table 6.

**[Table 5]**

| Class | Data Object | Data Attribute | Type |
|---|---|---|---|
| Pump | Mode.run | stVal | Boolean |
| | Mode.abnormal | stVal | Boolean |
| | Mode.fail | stVal | Boolean |
| | Intel1.Temperature | val | Float |
| | | hh.stVal | Boolean |
| | | hi.stVal | Boolean |
| | | ... | ... |
| | ... | ... | ... |

**[Table 6]**

| Analog Data Class | | | |
|---|---|---|---|
| Data Attribute Name | Description | Type | Remarks |
| Desc | Description | String | description |
| Val | Value | Float / Integer | data |
| Q | Quality | ENUMERATED | |
| T | TimeStamp | | |
| Level | Level | Structure | data |
| Alarm | Alarm | Structure | alarm |
| Unit | Unit | ENUMERATED | config |
| rangeCfg | RangeConfig | Structure | config |
| smpRate | Sampling Rate | Integer | config |

Meanwhile, the VDM Path is used as an identifier that is unique to particular data in the vessel as previously described, and may be used as a routing rule for indicating particular vessel data on VDM.

Accordingly, in transmitting and receiving vessel data based on VDM, VDIP may identify each vessel data according to the VDM Path.

As shown in FIG. 10, the VDM Path may be divided into "VDM Path for equipment data collection" and "VDM Path for service data provision".

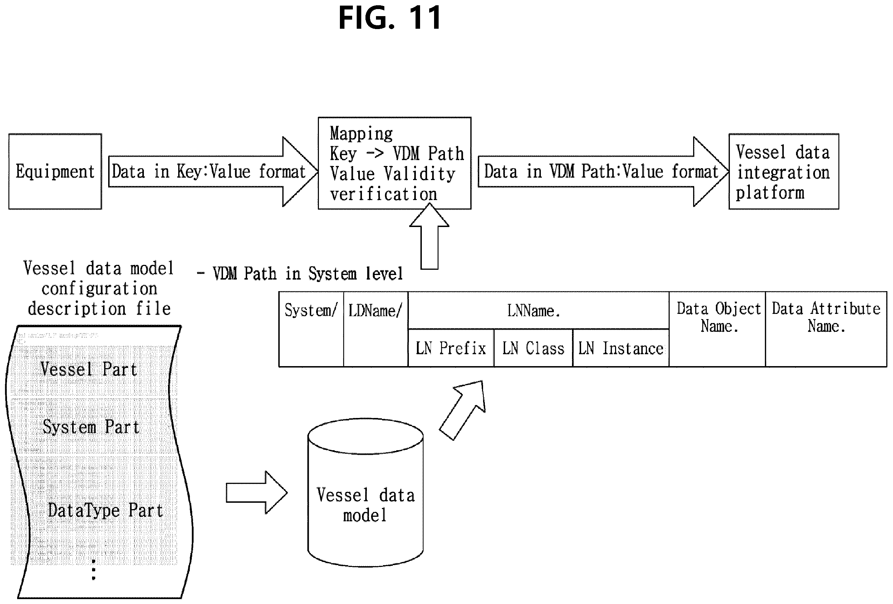

The "VDM Path for equipment data collection" reflects the levels of System Part and Data Type part as shown in FIG. 11.

The structure system of the "VDM Path for equipment data collection" is as follows (see FIG. 11).

```
       <System Name> / <Logical Device Name> / <Logical Node Name>.<Data
       Object Name>.[<Data Attribute Name>]+
```

Here, <Logical Node Name> is composed of <prefix>+<class>+<inst>, and + represents one or more repetitions.

The "VDM Path for equipment data collection" of the structure system described above may or may not include the prefix of System, Logical Device and Logical Node of System Part level if necessary.

Additionally, the "VDM Path for equipment data collection" may reflect all the levels of Vessel Part, System Part and Data Type Part.

In this case, the structure system of the "VDM Path for equipment data collection" is as follows.

```
       <Equipment Group Name> / <Equipment Name> / <Component Name> /
 <Logical Device Name> / <Logical Node Name>.<Data Object Name>.[<Data
 Attribute Name>]+
```

Here, <Logical Node Name> is composed of <prefix>+<class>+<inst>, and + represents one or more repetitions.

The "VDM Path for equipment data collection" of the structure system described above may or may not include the prefix of Equipment and Component of Vessel Part level and Logical Device and Logical Node of System Part level if necessary.

Meanwhile, the "VDM Path for service data provision" reflects the levels of Vessel Part, System Part and Data Type Part.

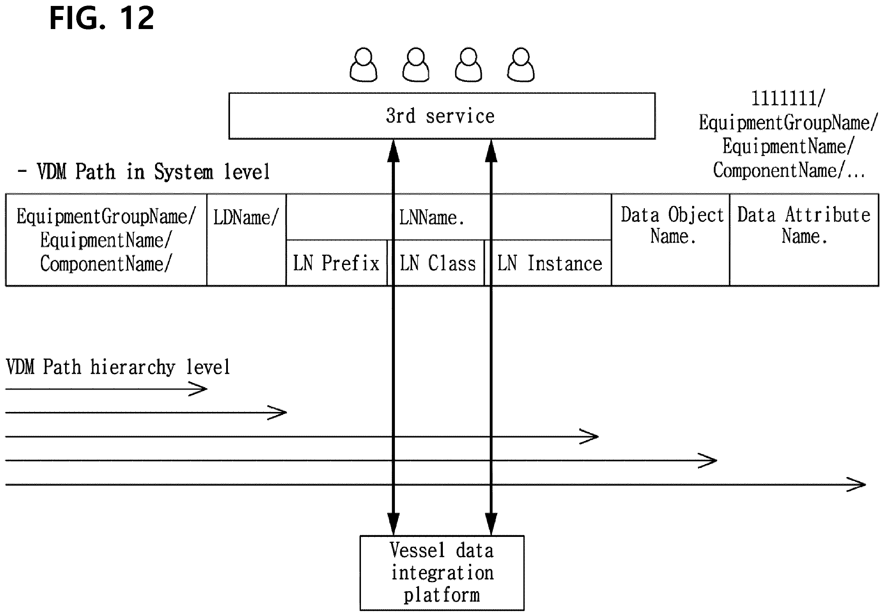

The structure system of the "VDM Path for service data provision" is as follows (see FIG. 12).

```
       <Equipment Group Name> / <Equipment Name> / <Component Name> /
 <Logical Device Name> / <Logical Node Name>.<Data Object Name>.[<Data
 Attribute Name>]+
```

Here, <Logical Node Name> is composed of <prefix>+<class>+<inst>, and + represents one or more repetitions.

The "VDM Path for service data provision" of the structure system described above may or may not include the prefix of Equipment and Component of Vessel Part level and Logical Device and Logical Node of System Part level if necessary.

As shown in FIG. 12, the range of data provided hierarchically changes depending on the hierarchy level of VDM Path used for service data provision. For example, when an input of 'Machinery/Machinery equipment/Diesel engine' as VDM Path is received from a 3^{rd} party service, all information associated with diesel engine is provided to the 3^{rd} party service, and when an input of 'Machinery/Machinery equipment/Diesel engine/Pump1' as VDM Path is received from a 3^{rd} party service, information associated with pump1 in the diesel engine is provided to the 3^{rd} party service.

Additionally, it is possible to manage a set of necessary VDM Paths to provide a particular customized service to a 3^{rd} party service.

When providing vessel data for an onshore service, a unique ID for identifying the vessel, vessel IMO number (e.g., 1111111), is added in front of the VDM Path.

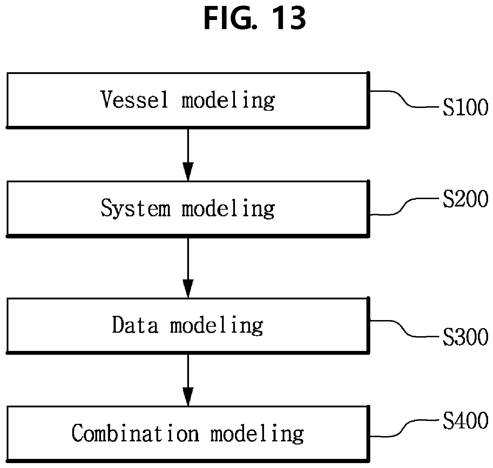

FIG. 13 is a processing diagram illustrating a method for modeling vessel data model according to an embodiment of the present disclosure.

The method for modeling vessel data model according to an embodiment of the present disclosure includes the vessel modeling step (S100) of hierarchically classifying vessel equipment and defining as a vessel model, the system modeling step (S200) of structuring data generated from the vessel equipment and defining as a system model, the data modeling step (S300) of defining attributes of the data generated from the vessel equipment as a data model, and the combination modeling step (S400) of combining the vessel model, the system model and the data model to form a VDM.

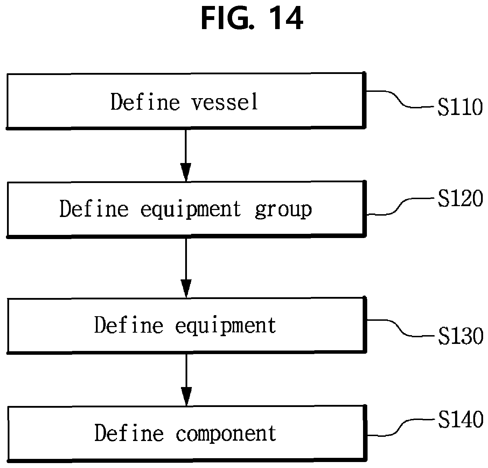

As shown in FIG. 14, the vessel modeling step (S100) described above may include the vessel definition step (S110) of defining the vessel, the equipment group definition step (S120) for grouping equipment of the vessel and defining as an equipment group, the equipment definition step (S130) of defining physical equipment, abstract equipment and logical equipment belonging to the equipment group as equipment, and the component definition step (S140) of subdividing the equipment into components and defining as component.

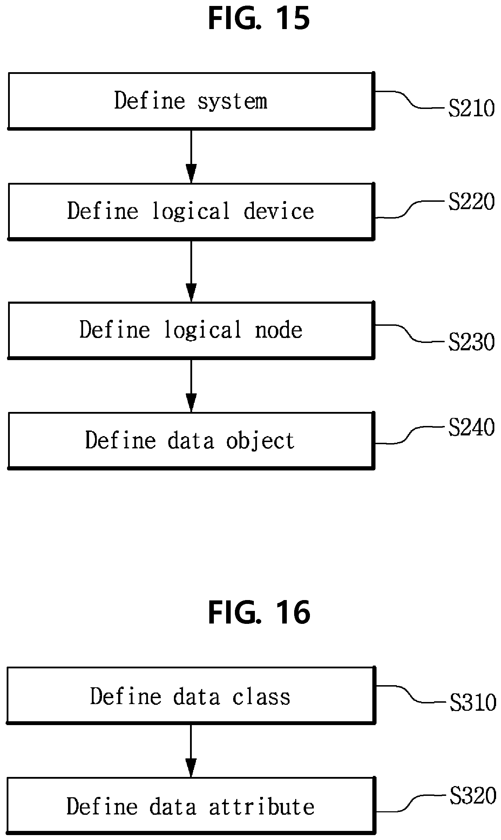

As shown in FIG. 15, the system modeling step (S200) described above may include the system definition step (S210) of defining a data collection device for collecting vessel data as system, the logical device definition step (S220) of defining the highest-level concept of logical equipment belonging to the system as logical device, the logical node definition step (S230) of defining object of function unit belonging to logical device as logical node, and the data object definition step (S240) of objectifying data class of the data model and defining as data object.

As shown in FIG. 16, the data modeling step (S300) may include the data class definition step (S310) of combining data attributes and defining as data class, and the data attribute definition step (S320) of defining data attribute of instance.

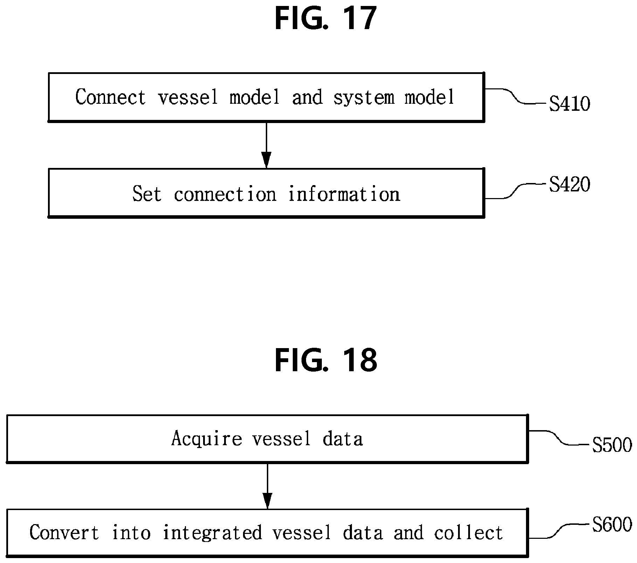

As shown in FIG. 17, the combination modeling step (S400) described above may include the step (S410) of connecting instance of equipment or component level of the vessel model with logical node of the system model, and the step (S420) of setting connection information for connecting the instance of equipment or component level of the vessel model with the logical node of the system model.

FIG. 18 is a processing diagram illustrating a method for collecting vessel data using a vessel data model according to an embodiment of the present disclosure.

The method for collecting vessel data using a vessel data model according to an embodiment of the present disclosure includes the step (S500) of acquiring vessel data generated from vessel equipment, and the step (S600) of converting vessel data into integrated vessel data having an integrated format based on VDM and collecting the same.

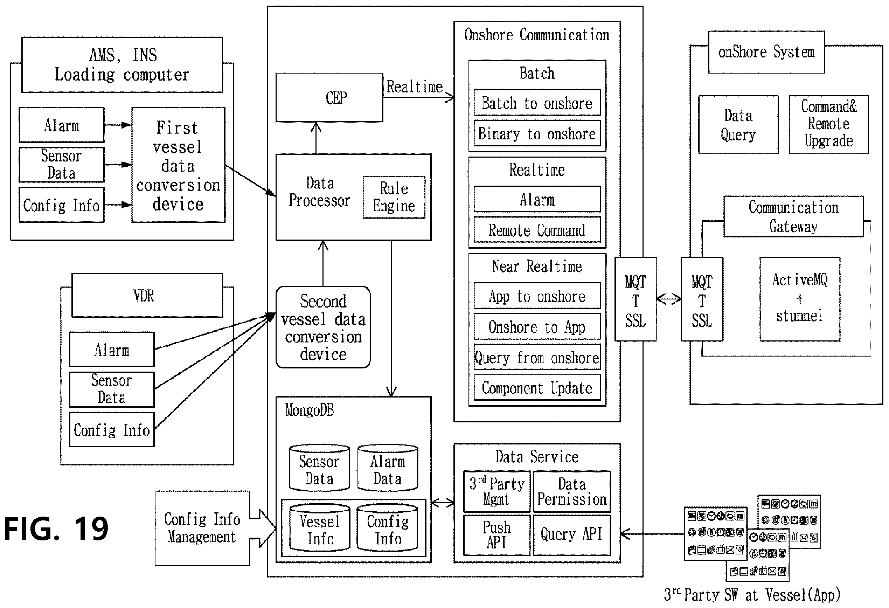

FIG. 19 is a schematic diagram showing the configuration of a device for collecting vessel data using a vessel data model according to an embodiment of the present disclosure.

The device for collecting vessel data using a vessel data model according to an embodiment of the present disclosure acquires vessel data (raw data) generated from vessel equipment, such as alarm data, sensor data and configuration data, and converts the vessel data into integrated vessel data having an integrated format based on VDM and collects the same.

As described above, the collected integrated vessel data converted into an integrated format may be transmitted to an onshore management system, or may be provided to a 3^{rd} party service.

The method for collecting vessel data and the method for modeling vessel data model as noted above may be implemented as an application or in the form of program commands that can be executed through various computer components, and recorded in computer-readable recording media. The computer-readable recording media may include program commands, data files and data structures, alone or in combination.

The program commands in recorded in the computer-readable recording media may be specially designed and configured for the present disclosure, and may be known and available to those having ordinary skill in the field of computer software.

Examples of the computer-readable recording media include hardware devices specially designed to store and execute program commands, such as magnetic media such as hard disk, floppy disk and magnetic tape, optical recording media such as Compact Disc Read Only Memory (CD-ROM) and Digital Versatile Disc (DVD), magneto-optical media such as floptical disk, and ROM, Random Access Memory (RAM) and flash memory.

Examples of the program commands include machine codes generated by a compiler as well as high-level language codes that can be executed by a computer using an interpreter. The hardware device may be configured to act as one or more software modules to perform processing according to the present disclosure, or vice versa.

Additionally, the method and device for collecting vessel data using a vessel data model may be implemented in the form of software and firmware that manages vessel data in an integrated manner and be provided in the vessel, and may be implemented as any system including software, firmware and hardware devices that manages vessel data in an integrated manner or their selective combinations and be provided in the vessel.

Those having ordinary skill in the technical field pertaining to the present disclosure will appreciate that various modifications and changes may be made without departing from the essential nature of the present disclosure. Additionally, the embodiments disclosed in the specification and drawings are only a particular embodiment presented to easily describe the disclosure and help the understanding of the present disclosure, but not intended to limit the scope of the present disclosure. Therefore, it should be interpreted that the scope of the present disclosure cover the embodiments disclosed herein as well as all modified or changed forms derived based on the technical spirit of the present disclosure.

### [Industrial Applicability]

According to the method and device for collecting vessel data using a vessel data model in accordance with the present disclosure and the vessel comprising the same, it is possible to manage (collect, store, provide) all formats of vessel data made by different protocols into an integrated data format.

## Claims

1. A method for collecting vessel data using a Vessel Data Model (VDM), comprising:
acquiring vessel data generated from vessel equipment; and
converting, on the basis of a VDM, the vessel data into integrated vessel data having an integrated format, and collecting same,
wherein the VDM is generated by combining a vessel model, a system model and a data model,
the vessel model is a model defined by hierarchically classifying the vessel equipment,
the system model is a model defined by structuring the vessel data, and
the data model is a model for defining the attributes and types of the vessel data.

2. The method for collecting vessel data using a vessel data model according to claim 1, wherein the vessel model is defined as vessel level, equipment group level, equipment level and component level,
the vessel level is a level on which a vessel itself is defined,
the equipment group level is a level on which vessel equipment is grouped and defined as an equipment group,
the equipment level is a level on which physical equipment, abstract equipment and logical equipment belonging to the equipment group are defined as equipment, and
the component level is a level on which the equipment is subdivided and defined as component.

3. The method for collecting vessel data using a vessel data model according to claim 1, wherein the system model is defined as system level, logical device level, logical node level and data object level,
the system level is a level on which a system for collecting vessel data is defined,
the logical device level is a level on which logical equipment belonging to the system is defined as logical device,
the logical node level is a level on which an object of function unit belonging to the logical device is defined as logical node, and
the data object level is a level on which a type of vessel data of the data model is defined as a data object.

4. The method for collecting vessel data using a vessel data model according to claim 3, wherein the logical node includes Class that defines a type or category of the logical node; and
Inst that is a number necessary when indicating multiple objects.

5. The method for collecting vessel data using a vessel data model according to claim 4, wherein the logical node further includes Prefix that defines a purpose or use of the logical node.

6. The method for collecting vessel data using a vessel data model according to claim 5, wherein a name of the logical node is defined in an order of the Prefix, the Class and the Inst, and
the name is unique within a logical device to which the logical node belongs.

7. The method for collecting vessel data using a vessel data model according to claim 1, wherein the data model includes:
Data Class that defines a type of the vessel data; and
Data Attribute that defines an attribute of the vessel data.

8. The method for collecting vessel data using a vessel data model according to claim 1, wherein the vessel model, the system model and the data model are combined by a combination model to generate the VDM, and
the combination model sets connection information for connecting the vessel model with the system model.

9. The method for collecting vessel data using a vessel data model according to claim 1, wherein the VDM hierarchically defines paths leading to each vessel data, and
each vessel data is identified by VDM Path.

10. The method for collecting vessel data using a vessel data model according to claim 9, wherein the VDM Path includes at last one name of equipment group, equipment, component, logical device, logical node, data object and data attribute.

11. The method for collecting vessel data using a vessel data model according to claim 10, wherein the VDM Path has a sequential arrangement of at least one name of the equipment group, the equipment, the component, the logical device, the logical node, the data object and the data attribute.

12. The method for collecting vessel data using a vessel data model according to claim 9, wherein the VDM Path is divided into VDM Path for data collection, and VDM Path for data provision.

13. The method for collecting vessel data using a vessel data model according to claim 12, wherein the VDM Path for data collection includes at least one name of system, logical device, logical node, data object and data attribute.

14. The method for collecting vessel data using a vessel data model according to claim 12, wherein the VDM path for data provision includes a unique ID that identifies the vessel.

15. The method for collecting vessel data using a vessel data model according to claim 12, wherein the range of data provided hierarchically changes depending on hierarchy level of the VDM Path for data provision.

16. The method for collecting vessel data using a vessel data model according to claim 1, wherein the VDM is described in vessel data model configuration description language to form a vessel data model configuration description file, and
the vessel data model configuration description file includes definition of vessel part, system part and data type part.

17. A computer program for performing the method for collecting vessel data according to any of claims 1 to 16.

18. A computer-readable recording medium having recorded thereon a computer program for performing the method for collecting vessel data according to any of claims 1 to 16.

19. A device for collecting vessel data using a vessel data model, which acquires vessel data generated from vessel equipment, and on the basis of a VDM, converts the vessel data into integrated vessel data having an integrated format and collects the same,
wherein the VDM is generated by combining a vessel model, a system model and a data model,
the vessel model is a model defined by hierarchically classifying the vessel equipment,
the system model is a model defined by structuring the vessel data, and
the data model is a model for defining the attributes and types of the vessel data.

20. A method for modeling vessel data model, comprising:
the vessel modeling step of hierarchically classifying vessel equipment and defining as a vessel model;
the system modeling step of structuring data generated from the vessel equipment and defining as a system model;
the data modeling step of defining attribute of the data generated from the vessel equipment as a data model; and
the combination modeling step of combining the vessel model, the system model and the data model to form a Vessel Data Model (VDM).
